# EUROPÄISCHE PATENTSCHRIFT

(11) **EP 2 193 236 B1**
(45) Veröffentlichungstag und Bekanntmachung des Hinweises auf die Patenterteilung: **29.08.2012**
(21) Anmeldenummer: 08801342.0
(22) Anmeldetag: 25.09.2008
(51) Int. Cl.: E01C 7/18, C04B 20/12

(54) **MINERALSTOFF ZUR HERSTELLUNG EINER FAHRBAHNSCHICHT, VERFAHREN ZUR HERSTELLUNG DESSELBEN, FAHRBAHNSCHICHT AUS SELBIGEM UND VERFAHREN ZUR HERSTELLUNG DER FAHRBAHNSCHICHT**
MINERAL SUBSTANCE FOR THE PRODUCTION OF A ROADWAY LAYER, METHOD FOR THE PRODUCTION THEREOF, ROADWAY LAYER MADE OF SAID SUBSTANCE, AND METHOD FOR THE PRODUCTION OF THE ROADWAY LAYER
SUBSTANCE MINÉRALE POUR LA PRODUCTION D'UN REVÊTEMENT DE CHAUSSÉE, SON PROCÉDÉ DE PRODUCTION, REVÊTEMENT DE CHAUSSÉE COMPRENANT CETTE SUBSTANCE, ET PROCÉDÉ DE PRODUCTION DUDIT REVÊTEMENT DE CHAUSSÉE

(30) Priorität: 05.10.2007 DE 102007048733; 16.01.2008 DE 102008004645
(43) Veröffentlichungstag der Anmeldung: 09.06.2010
(73) Patentinhaber: Matthäi Bauunternehmen GmbH & Co. KG, 27283 Verden (DE)
(72) Erfinder: FISCHER, Jürgen, 27308 Kirchlinteln (DE)
(74) Vertreter: Manasse, Uwe
(86) Internationale Anmeldenummer: PCT/DE2008/001582
(87) Internationale Veröffentlichungsnummer: WO 2009/043328

(56) Entgegenhaltungen:
- WO-A-02/50375
- FR-A- 2 885 363
- JP-A- 9 221 347

## Beschreibung

Die vorliegende Erfindung betrifft ein Verfahren zur Herstellung einer elektrisch leitfähigen Fahrbahnschicht.

Die Herstellung von Fahrbahnbelägen aus einer oder mehreren Fahrbahnschicht(en) aus verschiedenen Mineralstoffen wie Gesteine, Splitte, Sande und Füllermaterialien mit Bindemitteln in Form von Bitumen oder Zement entspricht dem Stand der Technik.

Weiterhin sehen die Dokumente WO 02/50375 A, US 4 849 020 A und BE 1 008 291 A3 die Zugabe von induktionsfähigen Zuschlagsstoffen vor. Das Dokument WO 02/50375 A nennt hier als Zuschlagsstoffe

Metallsalze, wie z. B NaCl oder KBr;

organische Salze, Trimethyl-Amonium-Metho-sulphat;

mineralische und synthetische Öl- oder Fettzusammensetzungen(beispielsweise in Form von Emulsionen oder eingekapselt);

Kohlenstoff- (C-) Komponenten (in der Form von Fäden, Partikeln und Gewebe);

metallische Komponenten, wie z. B. Fe, Al (in der Form von Fäden, Partikeln und Geweben).

Bei sämtlichen Herstellverfahren werden die Mineral- und Zuschlagsstoffe von dem Bindemittel während eines Mischvorganges umhüllt. Dieses hat die nachteilige Wirkung, dass zum Einen eine elektrische Leitfähigkeit unter den Mineral- bzw. Zuschlagsstoffen durch ein/das nicht elektrisch leitende Bindemittel unterbrochen wird. Auch können aufgrund der geringen Oberfläche der induktionsfähigen Zuschlagstoffe nur geringe Wirbelströme durch den Eintrag von elektromagnetischen Wellen erzeugt werden, so dass dem sehr hohen Energieaufwand nur eine sehr geringe Induktionsleistung gegenübersteht.

Zum anderen wird durch ein/das Bindemittel (zum Beispiel Bitumen) die Wärmeleitfähigkeit sehr eingeschränkt. Demzufolge erwärmen sich die induktionsfähigen Zuschlagsstoffe stark, geben die Wärme jedoch nur extrem schlecht an das umgebende Material (Mineralstoffe und Bindemittel) weiter.

Ein weiterer Nachteil zu den in den v. g. Dokumenten beschriebenen Herstellverfahren liegt in der relativ hohen Zuschlagsmenge von induktionsfähigen Material, um die gewünschte Induktionsleistung zu erzeugen.

Die FR 2 885 363 A offenbart einen Mineralstoff zur Herstellung einer Fahrbahnschicht, der aus einer Ansammlung von Gesteinskörnern mit verschiedenen Korngrößen besteht, von denen zumindest die großkörnigen Gesteinskörner mit einem elektrisch induktionsfähigen Material ummantelt sind.

Aus der JP 09 221347 A ergibt sich ein Mineralstoff, der aus einer Ansammlung von Gesteinskörnern mit verschiedenen Korngrößen besteht, von denen zumindest die großkörnigen Gesteinskörner mit einem elektrisch induktionsfähigen Material ummantelt sind, und der als Aggregat für Beton benutzt wird.

Die WO 02/50375 A offenbart ein Verfahren zur Herstellung einer Fahrbahnschicht, in welchem die elektrische Leitfähigkeit der Fahrbahnschicht durch Metalldraht oder Karbonfaser hergestellt wird.

Der vorliegenden Erfindung liegt somit die Aufgabe zugrunde, auf alternative Weise eine elektrisch leitfähige Fahrbahn herzustellen.

Diese Aufgabe wird gelöst durch ein Verfahren zur Herstellung einer elektrisch leitfähigen Fahrbahnschicht, dadurch gekennzeichnet, dass es die Schritte umfasst: Mischen von Mineralstoff aus einer Ansammlung von Gesteinskörnern mit verschiedenen Korngrößen, von denen zumindest die großkörnigen Gesteinskörner mit einem zur elektrischen Induktion fähigen Material ummantelt sind, mit einem Bindemittel und gegebenenfalls weiteren Zuschlägen und/oder Zusätzen, und Verdichten des resultierenden Gemisches derart, dass zumindest ein Teil der ummantelten Gesteinskörner gegeneinander gedrückt und ein elektrisch leitfähiger Kontakt zwischen selbigen hergestellt wird.

Mit "großkörnig" sind Korngrößen im Bereich von ca. 2 bis ca. 45 mm gemeint. Dies hängt aber von der Dicke der jeweiligen Fahrbahnschicht ab. Wenn z. B. die Fahrbahnschichtdicke 5 mm beträgt, so erstreckt sich die Korngröße auf lediglich ca. 2 mm bis ca. 5 mm.

Jedes hergestellte induktionsfähige Gesteinskom hat durch die Ummantelung mit dem induktionsfähigen Material für sich bereits eine optimale Induktionsleistungsaufnahme aufgrund der sehr großen Oberfläche.

Der resultierende Mineralstoff kann anschließend wie herkömmliche Mineralstoffe dem Mischverfahren bei der Herstellung des Fahrbahnbelagsmaterials zugegeben werden.

Bei dem Verfahren kann vorgesehen sein, dass die Ansammlung von Gesteinskörnern Splitt, ein Felsgestein, Lockergestein, vulkanische Schlacke oder Recyclingmaterial insbesondere aus Beton ist. Lockergestein kann zum Beispiel Kies oder Sand sein.

Vorteilhafterweise ist das zur elektrischen Induktion fähige Material Aluminium. Zur Ummantelung kann das Aluminium relativ einfach verflüssigt werden, da es einen relativ niedrigen Schmelzpunkt (ca. 660 ° C) hat.

Zweckmäßigerweise ist das zur elektrischen Induktion fähige Material ferromagnetisch. Durch die ferromagnetische Eigenschaft erfolgt eine Ummagnetisierung ("Hysteresis"), die durch das magnetische Wechselfeld bewirkt wird und zusätzlich Wärme erzeugt.

Zweckmäßigerweise ist außen auf dem zur elektrischen Induktion fähigen Material ein Korrosionsschutz vorgesehen. Der Korrosionsschutz dient zur Erhaltung der elektrischen Leitfähigkeit bei leicht oxidierendem, zur elektrischen Induktion fähigem Material. Ohne Korrosionsschutz würde nämlich ein zur elektrischen Induktion fähiges Material bei Kontakt mit Sauerstoff korrodieren und nur noch eine eingeschränkte elektrische Leitfähigkeit besitzen. Besagter Korrosionsschutz stellt gleichzeitig einen Schutz des zur elektrischen Induktion fähigen Materials gegen mechanische Beschädigungen dar.

Günstigerweise umfasst der Korrosionsschutz Bitumen.

Der Erfindung liegt die folgende überraschende Erkenntnis zugrunde: Vor dem Einbau, also im unverdichteten Fahrbahnbelagsmaterial, sind die einzelnen induktionsfähigen Gesteinskörner durch eventuell vorhandene weitere Mineralstoffe und das Bindemittel voneinander getrennt. Durch den Verdichtungsvorgang mittels eines Verdichtungsgeräts werden die induktionsfähigen Gesteinskörner gegeneinander gedruckt. Durch die erzeugte Reibung wird ein optional vorhandener Korrosionsschutz beschädigt, und das induktionsfähige Ummantelungsmaterial stellt untereinander Kontakt an den Berührungsflächen her. Durch den so hergestellten Kontakt sind die einzelnen induktionsfähigen Gesteinskörner in der Lage, einen elektrischen Kontakt mit den benachbarten induktionsfähigen Gesteinskörnern herzustellen und somit eine vernetzte elektrisch leitfähige Oberfläche über die gesamte, oder einzelne Schichten der Fahrbahn herzustellen. Hierdurch wird eine optimale Ausnutzung der eingetragenen elektromagnetischen Induktionswellen herbeigeführt. Die Beschädigung der optional vorhandenen Korrosionsschicht stellt nach dem Einbau und Verdichten des Fahrbahnmaterials keinen Nachteil mehr dar, da das induktionsfähige Ummantelungsmaterial in der Fahrbahn vor Korrosion geschützt ist.

Der Umfang der dem Mischgut zuzusetzenden induktionsfähigen Gesteinskörner bestimmt sich zum einen nach den späteren Anforderungen an die Fahrbahnschicht und zum anderen an den gewünschten Erwärmungsgrad der Fahrbahnschicht.

Weitere Merkmale und Vorteile der Erfindung ergeben sich aus den Ansprüchen und der nachfolgenden Beschreibung, in der Ausführungsbeispiele eines Mineralstoffes zur Herstellung eines Fahrbahnbelags und eines Verfahrens zur Herstellung eines Fahrbahnbelags anhand von schematischen Zeichnungen im einzelnen dargestellt sind. Dabei zeigt:
- Figur 1: eine Schnittansicht eines einzelnen mit elektrisch leitendem Material ummantelten Gesteinskorns eines Mineralstoffes, welches ebenfalls mit einer weiteren Korrosions- und Schutzschicht ummantelt ist, wobei die in der Ummantelung dargestellten Pfeile elektrische Ströme darstellen;
- Figur 2: zeigt eine Fahrbahnschicht mit Gesteinskörnern von Figur 1 vor (links) und nach Verdichtung (rechts) derselben;
- Figur 3: zeigt eine Schnittansicht von drei Gesteinskörnern von Figur 1 vor der Verdichtung;
- Figur 4: zeigt eine Schnittansicht von den in Figur 3 dargestellten Gesteinskörnern nach der Verdichtung;
- Figur 5: zeigt eine Schnittansicht entlang der Linie V-V in Figur 2; und
- Figur 6: zeigt eine Schnittansicht entlang der Linie VI-VI in Figur 2.

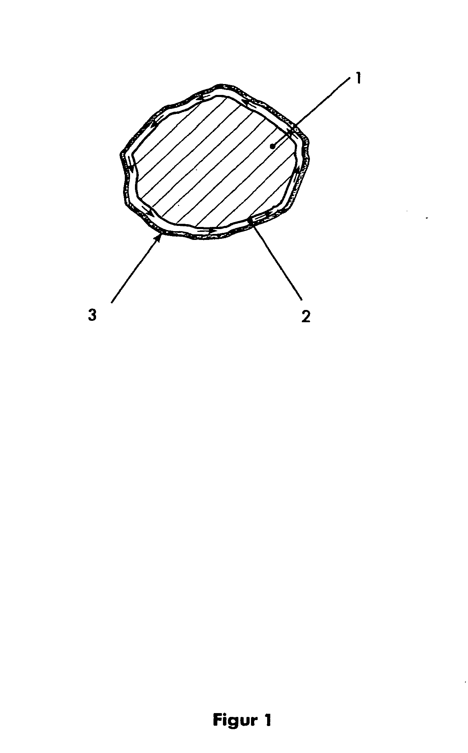

Das in Figur 1 gezeigte Gesteinskom 1 ist mit einem elektrisch leitendem Material 2, d. h. einem Metall, ummantelt, wobei darauf wiederum ein Korrosionsschutz 3 vorgesehen ist. Mehrere von dem in Figur 1 gezeigten Gesteinskom ergeben einen Mineralstoff zur Herstellung einer Fahrbahnschicht gemäß einer besonderen Ausführungsform der Erfindung.

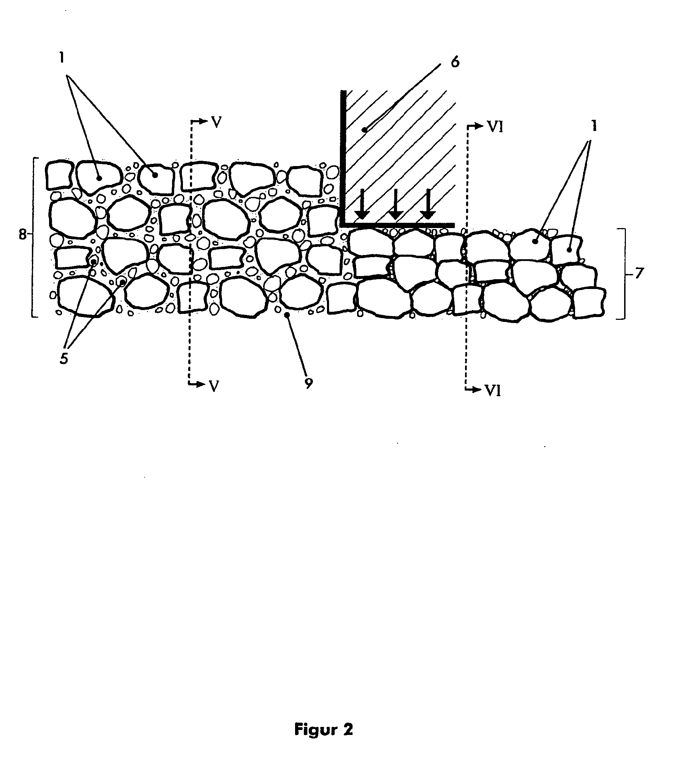

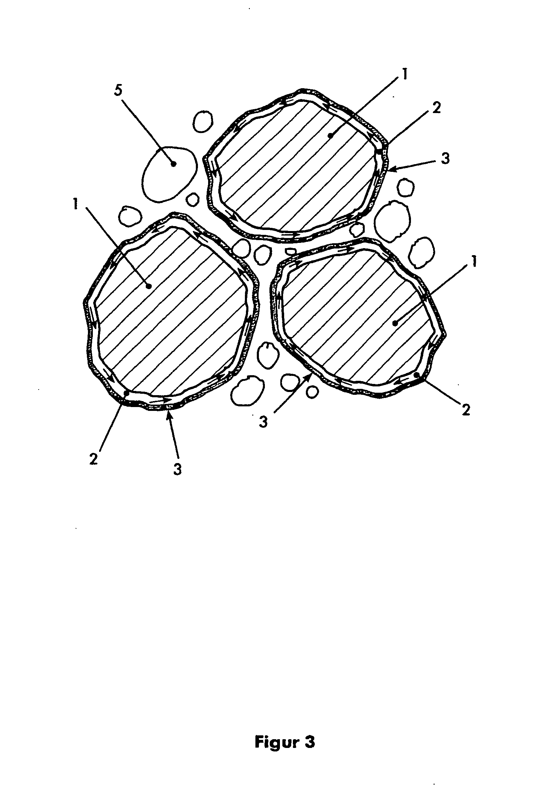

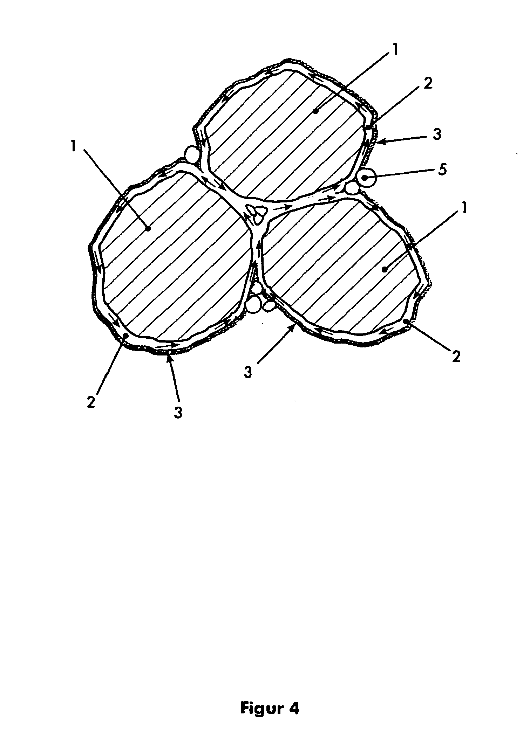

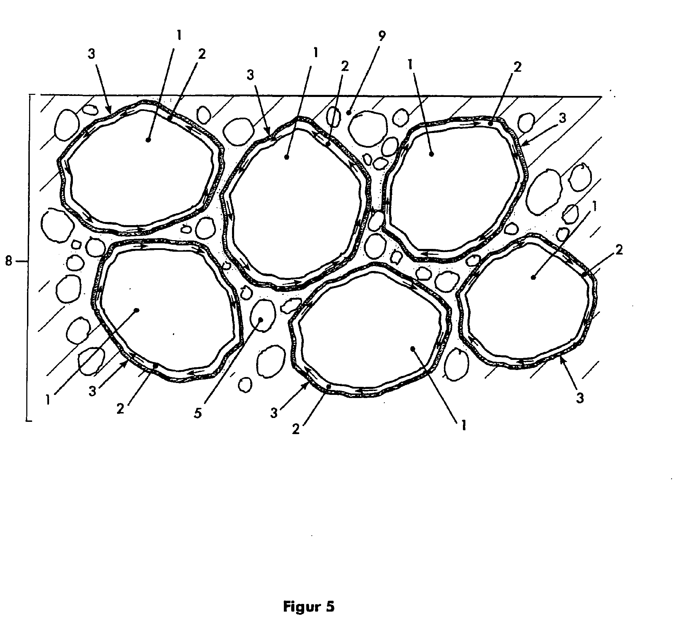

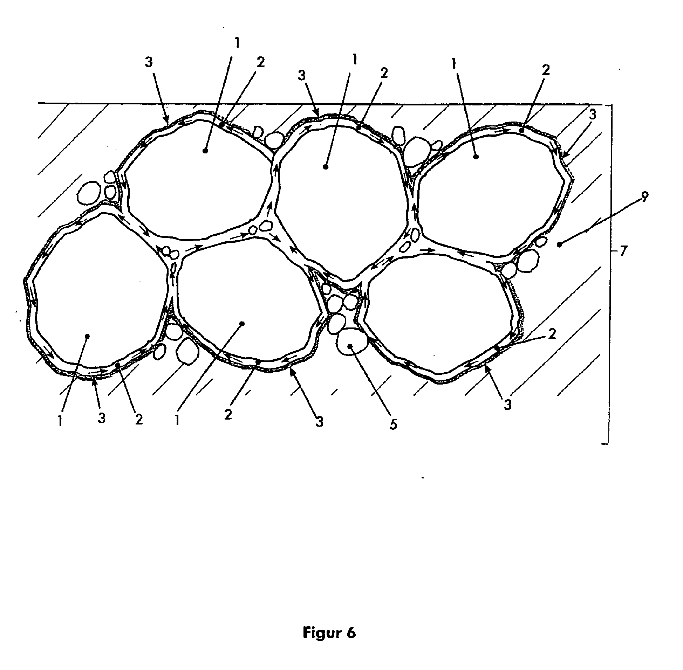

Auf der linken Seite der Figur 2 sind mehrere großkörnige ummantelte Gesteinskörner, von denen nur zwei mit der Bezugszahl 1 gekennzeichnet sind, und mehrere kleinkörnige nicht ummantelte Gesteinskörner, von denen zwei mit der Bezugszahl 5 gekennzeichnet sind, mit eventuell vorhandenen weiteren Mineralstoffen und einem Bindemittel, die bzw. das allgemein durch die Bezugszahl 9 gekennzeichnet ist/sind, in einer Fahrbahnschicht 8 gemischt, wobei jedoch noch keine Verdichtung stattgefunden hat. Auf der rechten Seite der Figur 2 ist bereits eine Verdichtung mittels eines Verdichtungsgeräts 6 erfolgt. Die verdichtete Fahrbahnschicht ist durch die Bezugszahl 7 gekennzeichnet. Die Figuren 3 und 4 sowie 5 und 6 sollen jeweils erläutern, wie durch die Verdichtung der Gesteinskörner 1, ausgehend von einem Zustand, in dem jedes Gesteinskom eine geschlossene elektrisch leitfähige Oberfläche aufweist (siehe Figuren 3 und 5), ein Zustand erreicht wird, in dem sich die elektrisch leitenden Materialien 2 der einzelnen Gesteinskörner 1 berühren und eine größere zusammenhängende elektrisch leitende Oberfläche bilden (siehe Figuren 4 und 6). Die in der vorstehenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Verfahren zur Herstellung einer elektrisch leitfähigen Fahrbahnschicht (7), **dadurch gekennzeichnet, dass** es die Schritte umfasst:
- Mischen von Mineralstoff aus einer Ansammlung von Gesteinskörnern (1, 5) mit verschiedenen Korngrößen, von denen zumindest die großkörnigen Gesteinskörner (1) mit einem zur elektrischen Induktion fähigen Material (2) ummantelt sind, mit einem Bindemittel (9) und gegebenenfalls weiteren Zuschlägen und/oder Zusätzen, und
- Verdichten des resultierenden Gemisches derart, dass zumindest ein Teil der ummantelten Gesteinskörner (1) gegeneinander gedrückt und ein elektrisch leitfähiger Kontakt zwischen selbigen hergestellt wird.

2. Verfahren nach Anspruch 1, **dadurch gekennzeichnet, dass** die Ansammlung von Gesteinskörnern (1, 5) Splitt, ein Felsgestein, Lockergestein, vulkanische Schlacke oder Recyclingmaterial insbesondere aus Beton ist.

3. Verfahren nach einem der Ansprüche 1 oder 2, **dadurch gekennzeichnet, dass** das zur elektrischen Induktion fähige Material (2) Aluminium ist.

4. Verfahren nach Anspruch 1 oder 2, **dadurch gekennzeichnet, dass** das zur elektrischen Induktion fähige Material (2) ferromagnetisch ist.

5. Verfahren nach einem der vorangehenden Ansprüche, **dadurch gekennzeichnet, dass** außen auf dem zur elektrischen Induktion fähigen Material (2) ein Korrosionsschutz (3) vorgesehen ist.

6. Verfahren nach Anspruch 5, **dadurch gekennzeichnet, dass** der Korrosionsschutz (3) Bitumen umfasst.

## Claims

1. Method for the production of an electrically conductive roadway layer (7), **characterised in that** it comprises the following steps:
- Mixing of mineral substance composed of an accumulation of pebbles (1, 5) of different sizes, at least the large-size pebbles (1) being coated with an electrically inductive material (2), with a binding agent (9) and, if necessary, further aggregates and/or additions, and
- Compacting the resulting mix such that at least a part of the coated pebbles (1) is pressed against one another and an electrically conductive contact is made between the same.

2. Method according to claim 1, **characterised in that** the accumulation of pebbles (1, 5) is chippings, solid rock, unconsolidated rock, volcanic lava or recycling material, in particular consisting of concrete.

3. Method according to one of the claims 1 or 2, **characterised in that** the electrically inductive material (2) is aluminium.

4. Method according to claim 1 or 2, **characterised in that** the electrically inductive material (2) is ferromagnetic.

5. Method according to one of the preceding claims, **characterised in that** a corrosion protection (3) is provided on the outside of the electrically inductive material (2).

6. Method according to claim 5, **characterised in that** the corrosion protection (3) comprises bitumen.

## Revendications

1. Procédé de production d'une couche de chaussée (7) électriquement conductrice, **caractérisé en ce qu'**il comprend les étapes consistant à :
- mélanger la substance minérale constituée d'une accumulation de grains de pierre (1, 5) de différentes tailles de grains, dont au moins les grains de pierre (1) à gros grains sont enrobés d'une matière (2) susceptible d'induction électrique, avec un liant (9) et le cas échéant d'autres adjuvants et/ou additifs, et
- compresser le mélange résultant de sorte qu'au moins une partie des grains de pierre (1) enrobés soit comprimée les uns contre les autres et qu'un contact électriquement conducteur entre ceux-ci soit établi.

2. Procédé selon la revendication 1, **caractérisé en ce que** l'accumulation des grains de pierre (1, 5) est des gravillons, une roche, de la roche friable, du laitier vulcanisé ou une matière de recyclage, en particulier constituée de béton.

3. Procédé selon l'une des revendications 1 ou 2, **caractérisé en ce que** la matière (2) susceptible d'induction électrique est l'aluminium.

4. Procédé selon la revendication 1 ou 2, **caractérisé en ce que** la matière (2) susceptible d'induction électrique est ferromagnétique.

5. Procédé selon l'une des revendications précédentes, **caractérisé en ce qu'**un revêtement anti-corrosion (3) est prévu à l'extérieur sur la matière (2) susceptible d'induction électrique.

6. Procédé selon la revendication 5, **caractérisé en ce que** le revêtement anti-corrosion (3) comprend du bitume.
